# EUROPEAN PATENT SPECIFICATION

(11) **EP 0 406 776 B1**
(45) Date of publication and mention of the grant of the patent: **04.01.1995**
(21) Application number: 90112613.6
(22) Date of filing: 02.07.1990
(51) Int. Cl.: F16L 39/00, F16L 37/12

(54) **Perfected pipe fitting assembly, particularly for pneumatic systems**
Rohrverbindungseinheit, insbesondere für Druckluftsysteme
Assemblage de raccord de tuyaux, notamment pour systèmes pneumatiques

(30) Priority: 07.07.1989 IT 354689; 29.03.1990 IT 341790
(43) Date of publication of application: 09.01.1991
(73) Proprietor: SISTEM PNEUMATICA S.r.l., 40132 Bologna (IT)
(72) Inventor: Landi, Enzo, I-40168 San Lazzaro di Savena (IT); Gamberini, Giovanni, I-40132 Bologna (IT)
(74) Representative: Jorio, Paolo

(56) References cited:
- DE-A- 2 856 064
- DE-U- 1 912 299
- DE-U- 7 207 725
- US-A- 2 516 883
- US-A- 2 772 898
- US-A- 4 068 870
- US-A- 4 123 091

## Description

The present invention relates to a pipe fitting assembly, particularly for pneumatic systems.

On machines fitted with pneumatic systems, the control panel presents a compartment in which the pneumatic system circuit components are connected by means of fittings. Said compartment houses an assembly panel with a number of compressed air inlets, each connected to a main fitting in turn connected to a branch fitting from which originate one o more pipes, depending on the number of ways provided, for supplying respective pneumatic actuators. Pipes supplying a number of actuators are sometimes fitted with a multiway fitting from which the single actuator pipes originate. The main fitting presents a threaded connection for assembly to the air inlet, and an outlet designed to press on to the inlet of the branch fitting.

Fittings of the aforementioned type present a number of drawbacks. In particular, the size of the branch fittings depends on the diameter of the pipe supplying the actuator, and in turn determines selection of the main fitting. In the absence of predetermined pipe diameters, therefore, the main fitting cannot be preassembled on to the assembly panel before fitting this on to the control panel. Moreover, the limited space available on the control panel poses serious tooling difficulties for connecting the various circuit components, bearing in mind that these are always connected along the axis of the main fitting. Assembly is even more complex when using a single air intake for a number of users, in which case, a series of branch fittings with connecting pipes must be installed, each provided with means whereby to support it to the assembly panel. The above connections are obviously impossible anyway in the case of systems featuring different diameter pipes requiring main fittings of different sizes. In other words, using the fittings currently available on the market: connection of the circuit components is made difficult on account of the limited amount of space available on the control panel; a series of branch fittings of different sizes cannot be installed; unless a large high-cost stock of fittings of all types is kept on hand, component dimensions must be determined well in advance for enabling purchasing; and, finally, serious problems are encountered in rerouting the pneumatic circuit.

In the Patent DE-A-2856 064 are described fittings having a first way in which a joint placed in the end of a pipe is housed and a second way in which an appendix of the same conformation as the joint is extending from the fitting body. The fixing of the joint or of the appendix into a way of a fitting is realized by clamping. In a first solution this clamping presents an annular portion housed into the way of the fitting and elastic blades extending from the annular portion and having a respective clutch claw to engage an annular groove of the joint. In a second solution the clamping has a "U" shaped elastic blade inserted transversely in the fitting body, to engage with its arms the annular groove of the joint. The fittings illustrated in the Patent DE-A-2856 064 present a number of drawbacks. In particular the mount of the "U" shaped blade is made difficult on account of the limited amount of space available on the control panel; a series of branch fittings of different sizes cannot be installed; and, a series of pipes of different diameter cannot be installed.

The aim of the present invention is to provide a pipe fitting assembly designed to overcome the above drawbacks, i.e. which presents means enabling fast-fit connection to the main fitting, which may be preassembled by virtue of all the branch fittings, even those of different diameter pipes, presenting the same fastening means, and by virtue of the main fitting being the same for all types of branch fittings.

Further aims and advantages of the present invention will be shown in the following description.

With this aim in view, according to the present invention, there is provided a pipe fitting assembly, particularly for pneumatic systems, which presents:
a main fitting, preferably supported on a fixed body, and having a top portion;
a branch fitting comprising a fitting body having a first portion in which is formed a first axial hole coaxial with said main fitting, and at least one second portion extending from said first portion and having a second axial hole communicating with said first hole;
connecting means between said main fitting and said first portion, said means being located adjacent said first hole and comprising a first pin carried on said first portion a central portion of which pin engages tangentially a part of an annular groove formed along the top portion of said main fitting; and an elastic member having an element designed to engage another part of said groove, thus securing said main fitting to said branch fitting.

Two preferred non-limiting embodiments of the present invention will be described by way of examples with reference to the accompanying drawings, in which:
Fig.1 shows a view in perspective of a first embodiment of the fitting assembly according to the present invention;
Fig.2 shows a section of the Fig.1 fitting during assembly;
Fig.3 shows a section of the Fig.1 fitting featuring additional fitting bodies;
Fig.4 shows a section of a component on the Fig.1 fitting;
Fig.5 shows a side view of a second embodiment of the fitting according to the present invention;

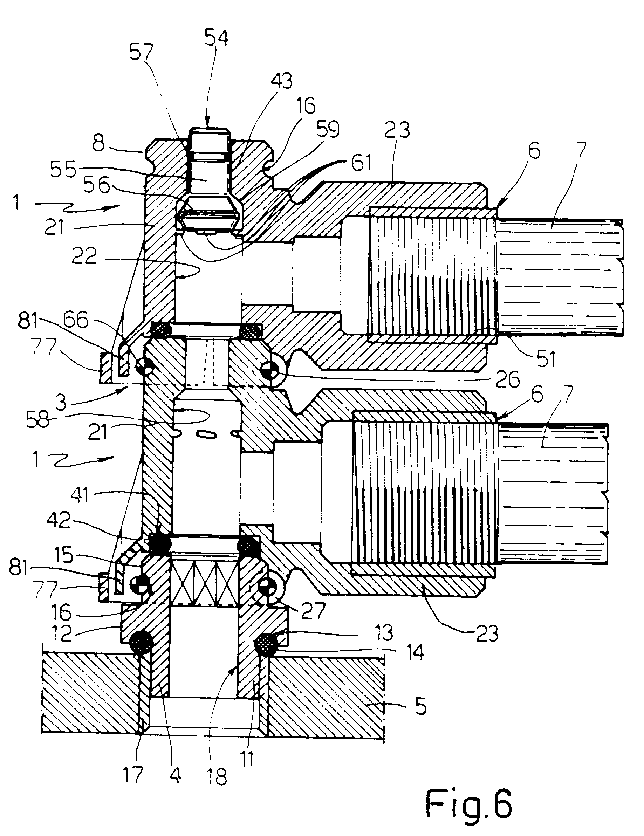

Fig.6 shows a section of the Fig.5 fitting featuring a number of fitting bodies;
Fig.7 shows a section along line III-III in Fig.5.

With reference to Fig.s 1 and 2, the fitting assembly according to the present invention comprises a branch fitting 1 for connecting parts of a pneumatic system, said fitting 1 comprising a fitting body 2 in which are defined means 3 for connection to a main fitting 4 installed on a fixed body 5, generally an assembly panel, means 6 for connection to a pipe 7, and means 8 for connection to a second fitting 1.

Main fitting 4 is cylindrical in shape, and comprises an externally threaded bottom portion 11; a central portion 12 larger in diameter than portion 11, so as define, between the same, a contact surface in which is formed an annular seat 13 for an annular seal 14; and a top portion 15 smaller in diameter than portion 12 and the outer surface of which presents an annular groove 16. Fixed body 5 presents a threaded hole 17 defining a compressed air inlet and connected at the bottom to a compressed air source. Main fitting 4 presents an axial through hole 18 faced at portion 15 for receiving a tool whereby to screw portion 11 inside hole 17.

With reference to Fig.s 1 and 2, body 2 of fitting 1 presents a first portion 21 which, when assembled, is coaxial with main fitting 4. Said first portion 21 presents an axial through hole 22 inside the top and bottom ends of which said connecting means 3 and 8 are formed. Body 2 presents a second substantially cylindrical portion 23 extending from and perpendicular to the central portion of portion 21. Said portion 23 presents an axial through hole 24, one end of which communicates with the central portion of hole 22, and the opposite end of which presents means 6 for connection to pipe 7. Body 2 is preferably molded from plastic material.

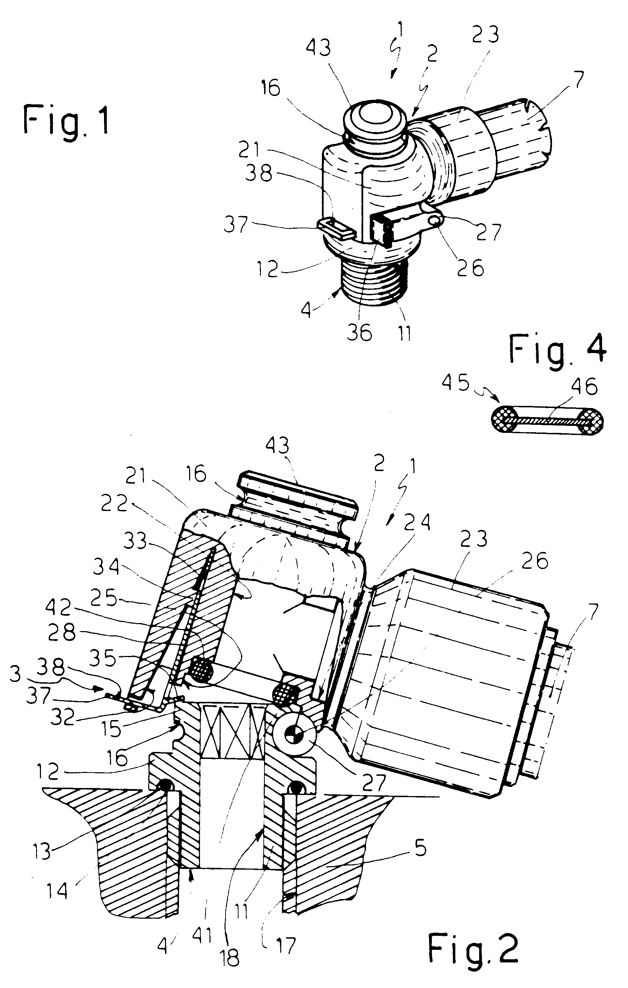

With reference to Fig.2, at the bottom end of hole 22 in portion 21, there is defined a seat 25 housing top portion 15 of fitting 4. Connecting means 3 comprise a pin 26 supported at each end on tabs 27 extending downwards from portion 21 at seat 25, in particular, from the face of portion 21 from which portion 23 extends. The longitudinal axis of pin 26 is perpendicular to that of hole 22 and, consequently, fitting 4. In actual use, the central portion of pin 26 is housed inside annular groove 16 on portion 15. Connecting means 3 also comprise a flexible blade 28 defined along a plane parallel to the axis of hole 22 and force-fitted inside a slot 32 formed in portion 21 on the side diametrically opposite that from which portion 23 originates. At the top of blade 28 there is cut a flexible tongue 33 extending obliquely downwards. In actual use, blade 28 is force-fitted inside slot 32, which presents a projection 34 which, during insertion, flexes tongue 33 back into its seat and, after insertion, acts as a contact surface for the bottom end of tongue 33 for preventing withdrawal of blade 28. At the bottom of blade 28, there is cut a second flexible tongue 35 extending obliquely upwards. In use, for connecting fitting 1 to main fitting 4, portion 21 of fitting 1 is arranged obliquely in relation to main fitting 4, so that a portion of groove 16 is engaged tangentially by the central portion of pin 26. With fitting 1 so positioned, tongue 35 rests on the top edge of portion 15. When fitting 1 is rotated in the direction enabling axial alignment of portion 21 and main fitting 4, blade 28 flexes outwards of portion 21 and about projection 34 until tongue 35 engages groove 16. Flexing of blade 28 is permitted by an enlargement formed in slot 32.

With reference to Fig.1, blade 28 comprises two opposed tabs 36 extending from its lateral edges, where tongue 35 is defined, and outwards of portion 21. From the bottom end of blade 28, a further tab 37 with a through slot 38 extends perpendicular to blade 28 and outwards of portion 21. In actual use, fitting 1 is release from main fitting 4 by simply acting on tabs 36 or tab 37, using a pointed tool such as a screwdriver, so as to flex blade 28 and so release tongue 35 from groove 16, and by turning fitting 1 in the opposite direction to that in which it is connected.

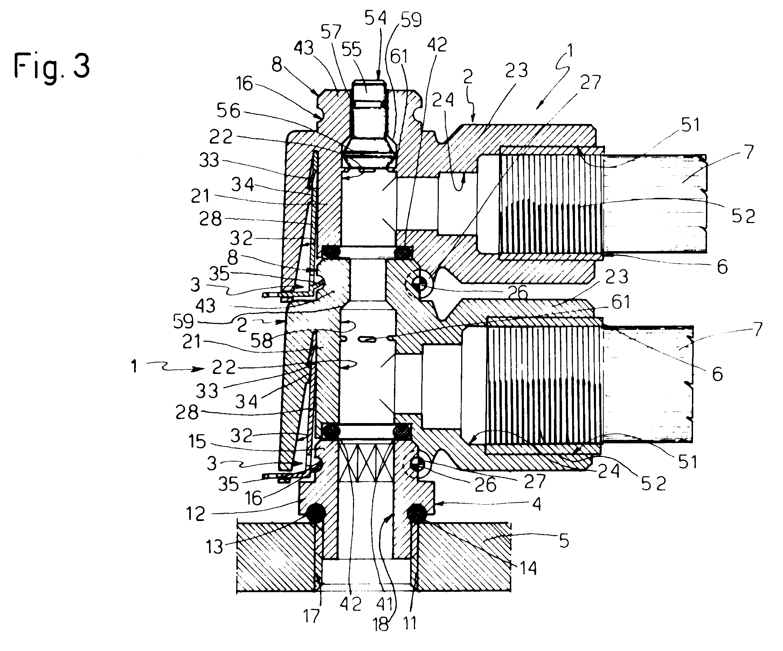

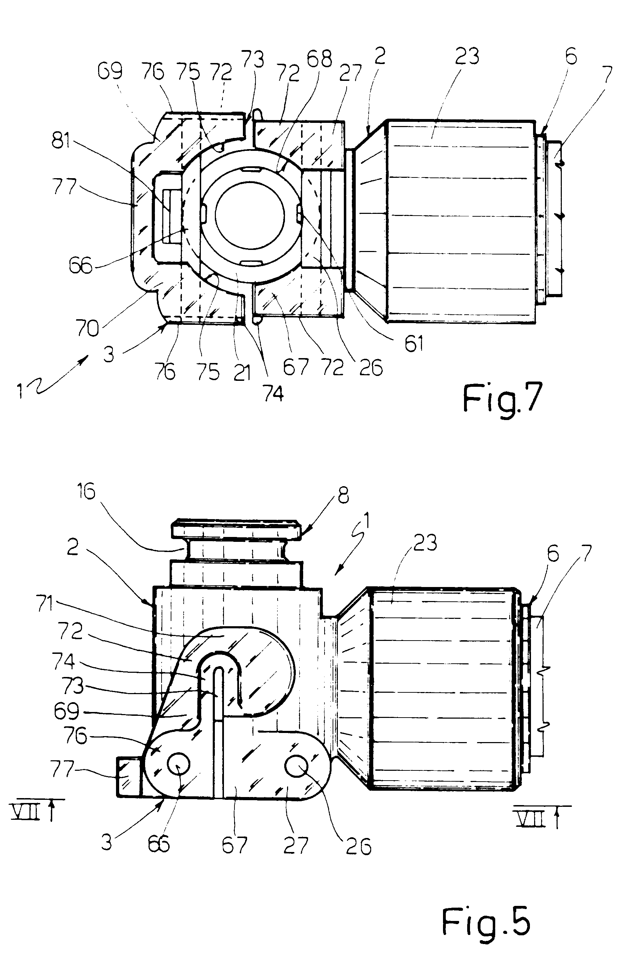

With reference to Fig.2, the bottom end of hole 22 presents an annular groove 41 for an annular seal 42 which, in use, rests on the top edge of fitting 4. Connecting means 8 consist simply of a hollow cylinder 43 of the same external design as top portion 15 of main fitting 4, and which extends upwards, coaxially and in communication with hole 22, from the top face of portion 21. Cylinder 43 also presents an annular groove 16 engageable by the connecting means 3 of a second fitting 1 as shown in Fig.3, thus enabling the formation of a fitting assembly comprising a number of fittings 1 connected together with no need for a connecting pipe as in the case of known fittings. It should be pointed out that portions 21 of all the fittings 1 may communicate pneumatically, or communication may be cut off so that cylinder 43 provides solely for mechanical support in the same way as main fitting 4. Pneumatic communication may be cut off by simply replacing seal 42 with an annular seal 45 (Fig.4) comprising a metal disk 46 for shutting off the air passage. Seal 45 may obviously also be installed on fitting 1 connected to main fitting 4, in which case, main fitting 4 provides solely for mechanical support and the compressed air source is connected by pipe 7. It should be pointed out that means 3 enable respective fitting 1 to be turned about the axis of main fitting 4, thus simplifying series assembly of fittings 1 by enabling connection of the same with no interference from portion 23 of bottom fitting 1, after which portions 23 of fittings 1 may be positioned as required.

In the Fig.2 and 3 embodiment, connecting means 6 consist simply of a threaded portion 51 formed towards the inner end of hole 24 and in which is screwed an externally threaded coupling 52 in which one end of pipe 7 is fitted. In other embodiments, means 6 may be defined by a threaded portion formed on the outer surface of portion 23, in which case, coupling 52 will be a fit-on type with a lock nut. In yet a further embodiment, means 6 may be defined by a serrated outer surface of portion 23. The end of portion 23 may, of course, present the same external shape as cylinder 43 for enabling connection of a further fitting 1 to portion 23.

With reference to Fig.3, it should be noted that, whereas pipes 7 present different diameters, both fittings 1 present the same external design and differ solely as to the diameter of respective portion 51. Consequently, using one main fitting 4, a fitting assembly may be formed featuring a number of fittings 1 stacked one on top of the other but connected to pipes 7 of different diameters. Similarly, main fittings 4 may be used having portions 11 and 12 of different diameters and portion 15 of the same size.

With reference to Fig.3, the last of a stack of fittings 1 presents a plug 54 for plugging the top end of hole 22. Said plug 54 presents a cylindrical top portion 55, and a bottom portion 56 having a central portion larger in diameter than said portion 55, and two opposed truncated-cone top and bottom portions, the top portion blending with portion 55. In actual use, portion 55 is housed inside cylinder 43 which is sealed by means of an annular seal 57, whereas portion 56 is housed in the top portion 58 of hole 22. Portion 58 is defined at the top by a shoulder 59 at the top end of hole 22, and, at the bottom, by a number of teeth 61 formed along hole 22. The axial length of portion 58 is greater than that of portion 56 to enable portion 56 to travel along portion 58. In actual use, plug 54 is forced upwards through the passage defined by teeth 61. Once portion 56 is inserted inside portion 58, it is prevented from being withdrawn downwards by the bottom portion of portion 56 contacting teeth 61. In the presence of compressed air inside hole 22, plug 54 is thrust upwards so that the top portion of portion 56 contacts shoulder 59. Plug 54 is used to indicate the presence of compressed air inside hole 22. If, when pressed downwards, plug 54 moves the short distance allowed by teeth 61, this obviously indicates the absence of compressed air inside hole 22. If, on the other hand, plug 54 remains stationary or can only be moved by applying considerable pressure, this indicates the presence of compressed air inside hole 22. Plug 54 is removed by simply applying sufficient downward pressure to enable portion 56 to overcome the resistance of teeth 61.

Fig.s 5 to 7 illustrate a second embodiment of the fitting assembly according to the present invention featuring the same elements as in the Fig.1 to 4 embodiment, which elements and component parts are therefore indicated using the same numbering system. What has already been said in connection with assembly and operation of the Fig.1 to 4 fitting assembly obviously also applies to that of Fig.s 5 to 7. The only difference between the two assemblies is in the design of connecting means 3 defined on fitting 1, which means 3 substantially comprise a pair of preferably metal pins 26 and 66 parallel to each other and lying in a plane perpendicular to the axis of hole 22. Pins 26 and 66 are located symmetrically in relation to said axis, and are designed to tangentially engage groove 16 on opposite sides.

Pin 66 is supported on elastic means designed to enable displacement of pin 66 substantially in the plane common to both pins 26 and 66. Said elastic means consist of two arms 69 and 70, each extending from a respective portion 71 a given distance from the plane of pins 26 and 66. In the case of a fitting 1 also featuring connecting means 8, said distance may advantageously be more or less half the total length of portion 21. Said two portions 71 are included in two respective flat parallel portions 72, each having a slot 73 substantially lying in a plane parallel to the diametrical plane of portion 21. Along slot 73, each portion 72 is defined by a rib 74 which is thus in the form of an upside down U.

Commencing from the end of slot 73, each arm 69 and 70 is substantially flared, with a partially cylindrical inner surface 75 detached from the outer surface of portion 21. Each tab 27 in turn extends into a tab 67 extending as far as slot 73 and having a partially cylindrical inner surface 68 slightly larger in diameter than groove 41. The outer surface of each arm 69 and 70 comprises a flat portion 76 projecting slightly from surface 72 and located at the end of pin 66 when engaged. As such, the smaller section of arm 69 or 70 is sufficiently flexible both in terms of width and thickness.

Finally, arms 69 and 70 are connected by a crosspiece 77 lying substantially in the plane of pins 26 and 66 and separated outwards from pin 66. To connect a fitting 1 to portion 15 of main fitting 4 or to cylinder 43 of another fitting 1, pin 26 is placed inside groove 16, after first inserting seal 42 inside groove 41, and fitting 1 turned about pin 26. The top edge of portion 15 forces pin 66 outwards, thus flexing arms 69 and 70, until pin 66 also engages groove 16. To release fitting 1, a tool is inserted in the gap between crosspiece 77 and the wall of portion 21, with which to force arms 69 and 70 outwards and so release pin 66 from groove 16. Fitting 1 may also be released by applying a tool, e.g. a screwdriver, on the edge of flat portion 76 of slot 73 projecting in relation to tab 67. At crosspiece 77, an appendix 81 extends downwards from portion 21 for limiting radial travel of pin 66, i.e. defining the maximum clearance between pins 26 and 66 or, rather, the maximum diameter of the bottom portion of portion 21, thus preventing undue mechanical strain being exerted on arms 69 and 70 when said tool is applied for releasing fitting 1.

The advantages of the present invention will be clear from the foregoing description.

In particular, it provides for fitting assembly enabling fast, troublefree connection (with no tools required) of the branch and main fittings, using snap-on connecting means enabling rotation of fitting 1 about the axis of main fitting 4 for positioning the branch fitting outlet as required. Moreover, fitting 1 is so designed as to enable connection of a further fitting 1 using the same connecting means, thus enabling the formation of a cascade fitting assembly requiring no connecting pipes as on currently available fittings. In the case of a cascade formation of fittings 1, provision may obviously be made for a compressed air inlet on one of fittings 1, and for separating (seal 45) a first and second series of fittings 1, thus enabling the formation of a fitting assembly catering to various circuits even at different pressures. By virtue of the design of fittings 1, said assembly may even be determined at the setup stage with main fitting 4 already preassembled, and modified subsequently as required using the same or a different number of components, thus allowing maximum freedom in the design of the system. Moreover, the diameter of portion 51 may differ from one fitting 1 to another. By virtue of body 2 being molded from plastic material, fittings 1 with portions 51 of different diameters may be produced using the same mold, by simply modifying the part of the mold defining portion 51. A further advantage of the present invention is that it enables the fitting assembly to be formed with no need for tools and in confined spaces. Finally, substantially radial displacement of connecting means 3 safeguards against accidental release caused by impact or lateral external pressure on the fitting, or fluctuations in the pressure of the compressed air inside the fitting.

To those skilled in the art it will be clear that changes may be made to the fitting assemblies described and illustrated herein without, however, departing from the scope of the present invention.

In particular, the means for connection to pipe 7 may differ from those illustrated herein; a number of portions 23 may originate from portion 21; and body 2 may be fitted inside with a valve, e.g. a regulating valve, for converting fitting 1 into a pressure regulator.

## Claims

1. A pipe fitting assembly, particularly for pneumatic systems, which presents:
a main fitting (4), preferably supported on a fixed body (5), and having a top portion (15);
a branch fitting (1) comprising a fitting body (2) having a first portion (21) in which is formed a first axial hole (22) coaxial with said main fitting (4), and at least one second portion (23) extending from said first portion (21) and having a second axial hole (24) communicating with said first hole (22);
connecting means (3) between said main fitting (4) and said first portion (21), said means (3) being located adjacent said first hole (22) and comprising a first pin (26) carried on said first portion (21) a central portion of which pin engages tangentially a part of an annular groove (16) formed along the top portion (15) of said main fitting (4); and an elastic member (28 or 69, 70) having an element (35 or 66) designed to engage another part of said groove (16), thus securing said main fitting (4) to said branch fitting (1).

2. A fitting assembly as claimed in Claim 1, characterised in that said elastic member comprises an elastic blade (28) secured to said first portion (21) and having an elastic tongue (35) designed to engage said groove (16).

3. A fitting assembly as claimed in claim 2, characterised in that said blade (28) is substantially defined in a plane parallel to the longitudinal axis of said first hole (22) and is forced inside a slot (32)) formed in said first portion (21); said slot (32) presenting, at said tongue (35), an enlargement enabling said blade (28) to flex during assembly of said branch fitting (1) to said main fitting (4).

4. A fitting assembly as claimed in claim 3, characterised in that from said blade (28) there originates at least one tab (36 or 37) extending outwards of said slot (32) and to which a tool can be applied for flexing said blade (28) and releasing said tongue (35) from said groove (16).

5. A fitting assembly as claimed in Claim 1, characterised in that said connecting means (3) comprise a second pin (66) carried on said elastic member (69,70) and parallel to said first pin (26); said pins (26,66) lying in a plane perpendicular to the axis of said first hole (22), and being arranged symmetrically in relation to said axis, and designed to engage said annular groove (16) tangentially on opposite sides.

6. A fitting assembly as claimed in Claim 5, characterised in that said elastic member comprises two arms (69,70) extending from two opposite portions (71) of said first portion (21) located between said pins (26,66).

7. A fitting assembly as claimed in Claim 6, characterised in that said portions (71) of said first portion (21) are located at a distance substantially equal to half the axial length of said first portion (21).

8. A fitting assembly as claimed in Claim 6 or 7, characterised in that said arms (69,70) are connected by a cross-piece (77) located substantially in the same plane as said pins (26,66) and separated outwards from said second pin (66); said crosspiece (77) being engageable by a tool for releasing said branch fitting (1) from said main fitting (4).

9. A fitting assembly as claimed in one of Claims 5 to 8, characterised in that, from said body (2), there extends downwards an appendix (81) defining the maximum distance between said pins (26,66) when said appendix (81) is contacted by said second pin (66).

10. A fitting assembly as claimed in any one of the foregoing Claims, characterised in that, from said first portion (21), there extends outwards, coaxially and in communication with said first hole (22), a hollow cylinder (43) of the same external design as said top portion (15) of said main fitting (4); said cylinder (43) being fitted, in use, with a second branch fitting (1) similar to the first and also featuring said connecting means (3).

11. A fitting assembly as claimed in Claim 10, characterised in that it comprises a plug (54) for sealing said cylinder (43).

12. A fitting assembly as claimed in Claim 11, characterised in that said plug (54) is designed to travel a short distance along said first hole (22) for indicating the presence of compressed air in the same.

13. A fitting assembly as claimed in any one of the foregoing Claims, characterised in that said main fitting (4) is hollow and installed in a compressed air inlet (17).

14. A fitting assembly as claimed in Claims 10, 11 and 13, characterised in that it comprises:
at least two of said branch fittings (1), the first of which being supported on said main fitting (4) and each following one being supported on top of the branch fitting (1) underneath; said connecting means (3) for each of said branch fittings (1), being designed to enable rotation of each branch flitting (1) about the longitudinal axis of said main fitting (4); and
said plug (54) being fitted inside said cylinder (43) of the uppermost of said branch fittings (1).

15. A fitting assembly as claimed in Claim 14, characterised in that at least a second plug (54) or an annular seal (45) comprising a metal disc (46) is fitted between said main fitting (4) and said branch fitting (1) or between two sets of said branch fittings (1) stacked one on top of the other.

16. A fitting assembly as claimed in any one of the foregoing Claims, characterised in that said fitting body (2) is formed from plastic material.

## Patentansprüche

1. Rohrfitting- oder Rohranschlußanordnung, insbesondere für pneumatische Systeme, die folgendes aufweist:
ein Hauptfitting oder Hauptanschlußteil (4), das vorzugsweise auf einem festen Körper (5) getragen ist und ein Oberteil (15) besitzt,
ein Zweigfitting oder Zweiganschlußstück (1), das einen Anschlußkörper (2) mit einem ersten Teil (21) aufweist, in dem ein erstes Axialloch (22) koaxial mit dem Hauptanschlußstück (4) ausgebildet ist und mindestens einem zweiten Teil (23), der sich von dem ersten Teil (21) erstreckt und ein zweites Axialloch (24) besitzt, das in Verbindung steht mit dem ersten Loch (22);
Verbindungsmittel (3) zwischen dem Hauptanschlußstück (4) und dem ersten Teil (21), wobei die Mittel (3) benachbart zu dem ersten Loch (22) angeordnet sind und einen ersten Stift (26) aufweist, der an dem ersten Teil (21) getragen ist, wobei ein Mittelteil des Stiftes tangential in Eingriff kommt mit einem Teil einer Ringnut (16), die entlang des Oberteils (15) des Hauptanschlußstückes (4) ausgebildet ist; und
ein elastisches Glied (28 oder 69, 70) mit einem Element (35 oder 66), des aufgebaut ist mit einem anderen Teil der Nut (16) in Eingriff zu kommen, wodurch das Hauptanschlußstück (4) an dem Zweiganschlußstück (1) befestigt ist.

2. Fitting- oder Anschlußanordnung nach Anspruch 1, dadurch gekennzeichnet, daß das elastische Glied eine elastische Klinge (28) aufweist, die an dem erstan Teil (21) befestigt ist und eine elastische Zunge (35) besitzt, die zum Eingriff mit der Nut (16) aufgebaut ist.

3. Fitting- oder Anschlußanordnung nach Anspruch 2, dadurch gekennzeichnet, daß die Klinge (28) im wesentlichen in einer Ebene parallel zu der Längsachse des ersten Lochs (22) definiert ist und in einen Schlitz (32) gedrängt ist, der in dem ersten Teil (21) ausgebildet ist, wobei der Schlitz (32) an der Zunge (35) eine Vergrößerung aufweist, die es der Klinge (28) ermöglicht, sich zu biegen während der Anordnung des Zweiganschlußstückes (1) an dem Hauptanschlußstück (4).

4. Fitting- oder Anschlußanordnung nach Anspruch 3, dadurch gekennzeichnet, daß von der Klinge (28) mindestens ein Anschluß oder eine Lasche (36 oder 37) ausgeht, die sich nach außen von dem Schlitz (32) erstreckt und an die ein Werkzeug angelegt werden kann zum Biegen der Klinge (28) und zum Lösen der Zunge (35) aus der Nut (16).

5. Fitting- oder Anschlußanordnung nach Anspruch 1, dadurch gekennzeichnnet, daß die Verbindungsmittel (3) einen zweiten Stift (66) aufweisen, der an dem elastischen Glied (69, 70) getragen ist und parallel zu dem ersten Stift (26) ist; wobei die Stifte (26, 66) in einer Ebene senkrecht zu der Achse des ersten Lochs (22) liegen und symmetrisch angeordnet sind bezüglich zur Achse und zum tangentialen Eingriff mit der Ringnut (16) aufgebaut sind, und zwar an gegenüberliegenden Seiten.

6. Fitting- oder Anschlußanordnung nach Anspruch 5, dadurch gekennzeichnet, daß das elastische Glied zwei Arme (69, 70) aufweist, die sich von zwei gegenüberliegenden Teilen (71) des zwischen den Stiften (26, 66) angeordneten ersten Teils (21) erstrecken.

7. Fitting- oder Anschlußanordnung nach Anspruch 6, dadurch gekennzeichnet, daß die Teile (71) des ersten Teils (21) mit einem Abstand, der im wesentlichen gleich der Hälfte der Axiallänge des ersten Teils (21) ist, angeordnet sind.

8. Fitting- oder Anschlußanordnung nach Anspruch 6 oder 7, dadurch gekennzeichnet, daß die Arme (69, 70) durch ein Kreuzstück (77) verbunden sind, das im wesentlichen in derselben Ebene wie die Stifte (26, 66) angeordnet ist und nach außen getrennt ist von dem zweiten Stift (66), wobei das Kreuzstück (77) mit einem Werkzeug in Eingriff bringbar ist zum Lösen des Zweiganschlußstückes (1) von dem Hauptanschlußstück (4).

9. Fitting- oder Anschlußanordnung nach einem der Ansprüche 5 bis 8, dadurch gekennzeichnet, daß sich von dem Körper (2) ein Anhang (81) nach unten erstreckt, der den Maximalabstand zwischen den Stiften (26, 66) definiert, wenn der Anhang (81) durch den zweiten Stift (66) kontaktiert wird.

10. Fitting- oder Anschlußanordnung nach einem der vorhergehenden Ansprüche, dadurch gekennzeichnet, daß sich von dem ersten Teil (21) ein hohler Zylinder (43) nach außen erstreckt, und zwar koaxial zu und in Vorbindung mit dem ersten Loch (22), wobei der hohle Zylinder (43) denselben Außenaufbau besitzt wie das Oberteil (15) des Hauptanschlußstückes (4); wobei der Zylinder (43) bei der Verwendung mit einem zweiten Zweiganschlußstück (1) versehen ist, und zwar ähnlich zu dem ersten und auch die Verbindungsmittel (3) aufweist.

11. Fitting- oder Anschlußanordnung nach Anspruch 10, dadurch gekennzeichnet, daß sie einen Stopfen (54) aufweist, zum Abdichten des Zylinders (43).

12. Fitting- oder Anschlußanordnung nach Anspruch 11, dadurch gekennzeichnet, daß der Stopfen (54) zur Bewegung eines kurzen Abstandes entlang des ersten Lochs (22) aufgebaut ist zur Anzeige, daß Druckluft in demselben vorhanden ist.

13. Fitting- oder Anschlußanordnung nach einem der vorhergehenden Ansprüche, dadurch gekennzeichnet, daß das Hauptanschlußstück (4) hohl ist und in einem Drucklufteinlaß (17) installiert ist.

14. Fitting- oder Anschlußanordnung nach Anspruch 10, 11 und 13, dadurch gekennzeichnet, daß sie folgendes aufweist:
mindestens zwei der Zweiganschlußstücke (1), wobei das erste an dem Hauptanschlußstück (4) getragen ist und jedes folgende an dem Oberteil des Zweiganschlußstückes (1) von unten getragen wird; wobei die Verbindungsmittel (3) für jedes der Zweiganschlußstücke (1) so aufgebaut ist, daß es eine Drehung jedes Zweiganschlußstückes (1) um die Längsachse des Hauptanschlußstückes (4) ermöglicht; und wobei der Stopfen (54) an der Innenseite des Zylinders (43) des obersten der Zweiganschlußstücke (1) angepaßt ist.

15. Fitting- oder Anschlußanordnung nach Anspruch 14, dadurch gekennzeichnet, daß mindestens ein zweiter Stopfen (54) oder eine Ringdichtung (45), die eine Metallscheibe (46) aufweist zwischen dem Hauptanschlußstück (4) und dem Zweiganschlußstück (1) oder zwischen zwei Sätzen von Zweiganschlußstücken (1), die aufeinander gestapelt sind, angepaßt ist.

16. Fitting- oder Anschlußanordnung nach einem der vorhergehenden Ansprüche, dadurch gekennzeichnet, daß der Fitting- oder Anschlußstückkörper (2) aus einem Plastikmaterial gebildet ist.

## Revendications

1. Assemblage de raccord de tuyaux, destiné en particulier à des systèmes pneumatiques, qui présente :
un raccord principal (4) monté de préférence sur un corps fixe (5) et présentant une partie supérieure (15);
un raccord de branchement (1), comprenant un corps de raccord (2) présentant une première partie (21), dans laquelle est formé un premier trou axial (22), coaxial par rapport audit raccord principal (4), et au moins une seconde partie (23) s'étendant depuis ladite première partie (21) et présentant un second trou axial (24) communiquant avec ledit premier trou (22);
des moyens de connexion (3) entre ledit raccord principal (4) et ladite première partie (21) lesdits moyens (3) étant adjacents audit premier trou (22) et comprenant un premier tourillon (26), monté sur ladite première partie (21), une partie centrale de ce tourillon étant en prise tangentiellement avec une partie d'une gorge annulaire (16) formée le long de la partie supérieure (15) dudit raccord principal (4); et un organe élastique (28 ou 69, 70), présentant un élément (35 ou 66) destiné à venir en prise avec une autre partie de ladite gorge (16), de manière à permettre ainsi de fixer ledit raccord principal (4) audit raccord de branchement (1).

2. Assemblage de raccord selon la revendication 1, caractérisé en ce que ledit organe élastique comprend une lamelle élastique (28) fixée à ladite première partie (21) et présentant une languette élastique (35) destinée à venir en prise avec ladite gorge (16).

3. Assemblage de raccord selon la revendication 2, caractérisé en ce que ladite lamelle (28) est substantiellement définie dans un plan parallèle à l'axe longitudinal dudit premier trou (22) et introduite de force à l'intérieur d'une fente (32) ménagée dans ladite première partie (21); ladite fente (32) présentant, sur ladite languette (35), un élargissement permettant à ladite lamelle (28) de fléchir durant le montage dudit raccord de branchement (1) sur ledit raccord principal (4).

4. Assemblage de raccord selon la revendication 3, caractérisé en ce que, depuis ladite lamelle (28), s'étend au moins une patte (36 ou 37) s'étendant vers l'extérieur de ladite fente (32) et sur laquelle un outil peut être appliqué, afin de fléchir ladite lamelle (28) et de libérer ladite languette (35) de ladite gorge (16).

5. Assemblage de raccord selon la revendication 1, caractérisé en ce que lesdits moyens de connexion (3) comprennent un second tourillon (66), monté sur ledit organe élastique (69, 70) et parallèle audit premier tourillon (26); lesdits tourillons (26, 66) étant situés dans un plan perpendiculaire à l'axe dudit premier trou (22) et étant disposés symétriquement par rapport audit axe, et destinés à venir en prise avec ladite gorge annulaire (16), de manière tangentielle, sur des côtés opposés.

6. Assemblage de raccord selon la revendication 5, caractérisé en ce que ledit organe élastique comprend deux bras (69, 70) s'étendant depuis deux parties opposées (71) de ladite première partie (21), située entre lesdits tourillons (26, 66).

7. Assemblage de raccord selon la revendication 6, caractérisé en ce que lesdites parties (71) de ladite première partie (21) sont situées à une distance substantiellement égale à la moitié de la longueur axiale de ladite première partie (21).

8. Assemblage de raccord selon la revendication 6 ou 7, caractérisé en ce que lesdits bras (69, 70) sont reliés par une pièce transversale (77), située substantiellement dans le même plan que lesdits tourillons (26, 66) et s'écartent en direction de l'extérieur par rapport audit second tourillon (66) ; ladite pièce transversale (77) pouvant être mise en prise avec un outil pour libérer ledit raccord de branchement (1) dudit raccord principal (4).

9. Assemblage de raccord selon l'une des revendications 5 à 8, caractérisé en ce que, depuis ledit corps (2), s'étend vers le bas un appendice (81), définissant la distance maximale entre lesdits tourillons (26, 66) lorsque ledit appendice (81) est mis en contact par ledit second tourillon (66).

10. Assemblage de raccord selon l'une quelconque des revendications précédentes, caractérisé en ce que, depuis ladite première partie (21), s'étend vers l'extérieur, de façon coaxiale et en communication avec ledit premier trou (22), un cylindre creux (43) présentant la même forme extérieure que ladite partie supérieure (15) dudit raccord principal (4); ledit cylindre (43) étant pourvu, lors de l'utilisation, d'un second raccord de branchement (1) analogue au premier et présentant également lesdits moyens de connexion (3).

11. Assemblage de raccord selon la revendication 10, caractérisé en ce qu'il comprend un bouchon (54) servant à fermer hermétiquement ledit cylindre (43).

12. Assemblage de raccord selon la revendication 11, caractérisé en ce que ledit bouchon (54) est conçu pour se déplacer sur une courte distance le long dudit premier trou (22), afin d'indiquer la présence d'air comprimé dans ce dernier.

13. Assemblage de raccord selon l'une quelconque des revendications précédentes, caractérisé en ce que ledit raccord principal (4) est creux et monté dans une entrée d'air comprimé (17).

14. Assemblage de raccord selon la revendication 10, 11 ou 13, caractérisé en ce qu'il comprend :
au moins deux desdits raccords de branchement (1), le premier d'entre eux étant monté sur ledit raccord principal (4) et chaque raccord venant ensuite étant supporté, par en dessous, sur le sommet d'un raccord de branchement (1) ; lesdits moyens de connexion (3) pour chacun desdits raccords de branchement (1) étant conçus de manière à permettre la rotation de chaque raccord de branchement (1) autour de l'axe longitudinal dudit raccord principal (4) ; et
ledit bouchon (54) étant monté à l'intérieur dudit cylindre (43) du raccord le plus haut parmi lesdits raccords de branchement (1).

15. Assemblage de raccord selon la revendication 14, caractérisé en ce qu'au moins un second bouchon (54), ou un joint d'étanchéité annulaire (45) comprenant un disque métallique (46), est monté entre ledit raccord principal (4) et ledit raccord de branchement (1), ou entre deux jeux de ces raccords de branchement (1), empilés l'un au dessus de l'autre.

16. Assemblage de raccord selon l'une quelconque des revendications précédentes, caractérisé en ce que ledit corps de raccord (2) est formé à partir de matière plastique.
